# EUROPEAN PATENT APPLICATION

(11) **EP 1 116 437 A2**
(43) Date of publication of application: **18.07.2001**
(21) Application number: 01500005.2
(22) Date of filing: 10.01.2001
(51) Int. Cl.: A01K 61/00

(54) **Cage for fish-farming**

(30) Priority: 14.01.2000 ES 200000076
(71) Applicant: Galvez Pie, Jordi, 08800 Vilanova i la Geltru (Barcelona) (ES)
(72) Inventor: Galvez Pie, Jordi, 08800 Vilanova i la Geltru (Barcelona) (ES)
(74) Representative: Duran Moya, Carlos

(57) **Abstract**

The cage comprises a rigid structure open at its upper side and provided with wide openings in its lateral faces and in its base or bottom, carrying suitable gratings for closing the openings of the cage which are submerged in the water, and the structure of the cage having flotation characteristics so that the upper part thereof emerges from the water.

## Description

The present invention is intended to disclose a cage for fish-farming which provides substantial features of novelty and inventive step with respect to the prior art.

Fish-farming is developing very rapidly owing to the need to obtain ever-increasing quantities of food resources and to the gradual exhaustion of the natural fishing grounds. To this end, different types of installations for fish-farming have been devised, for the purpose of rearing fish in the best possible conditions, both from the point of view of rearing different species and from the point of view of economy of manufacture of the means for fish-farming and of the manner of handling the fish, from their fry state to maturity. However, the means known at present are either excessively complicated and costly because they are complex fixed installations associated with the sea bed or, when they are very much simplified devices, based on nets suspended from a retaining frame which contain the fish inside them, have problems due to their fragility, rapid clogging by algae, necessitating costly net-changing operations, frequent maintenance and others. Mention should also be made in this connection of the high costs which currently have to be borne for the systems of nets used at present in fish-farming. Equally, an important drawback consists in the easy breakage of the nets by the action of predators, storms and other factors, as well as the significant loss of effective volume of the area enclosed by the net caused by marine currents, which leads to a loss of production capacity. The result of all the drawbacks mentioned is the need for frequent changing of the nets, which at present have a useful life of approximately four months.

The cage for fish-farming of the present invention is intended to solve the problems indicated above, providing the means for having available an enclosure for fish-farming which is permanently arranged in flotation, occupying a position immediately at the surface of the water and permitting its easy handling when the time comes to remove the fish when they have reached marketable size.

Essentially, the cage for fish-farming of the present invention consists of a rigid support structure, which avoids the losses of volume, open or closed at its upper side and provided with wide openings in its lateral faces and in its base or bottom, carrying suitable gratings for closing the openings of the cage which are submerged in the water, and the structure of the cage having flotation characteristics so that the upper part thereof emerges from the water. In a preferred version, it may assume a straight parallelepipedal shape, which may be cuboid, the lateral walls and upper and lower sides of which consist of multiple longitudinal members and cross-members consisting of tubular bodies filled with a buoyant material, for example expanded polyurethane or the like, so that the cage assembly has a slight buoyancy which tends to maintain it with a reduced upper part out of the water. On its lateral faces it will preferably comprise vertically arranged longitudinal members which form large vertical windows, while on the upper and lower sides the cage structure will preferably be in the form of a wide grid. To close the openings in the lateral walls and the lower side, the cage of the present invention will preferably comprise gratings of iron, steel, plastics, fibre, etc. with opening dimensions suitable for preventing the escape of the fry to the outside and for avoiding excessive clogging. Said gratings may be painted with "antifouling" algae-preventing paint and be associated in any desired manner with the above-mentioned sides of the cage, for example by fixing by means of retaining profiles and the corresponding screws, or some other system, by means of guillotine-like removable panels or other systems which permit easy fitting and eventual removal for cleaning, etc.

The cage will likewise have multiple external bars or rails intended to retain the gratings, preventing their deformation towards the outside. Said bars may serve also as a base for anchorage of mesh retaining devices, in the form of irremovable seals or others, in order to avoid the effect of inward curvature of the grating panels.

The cage will be completed by an assembly of securing rings on some of its vertical members to permit the securing of the cage with respect to some anchorage point on the sea bed, or also for towing the cage to the site where the removal of the fish which it contains, or other work, will take place.

The cage will likewise have an upper handrail to facilitate servicing thereof, and some platform to allow the installation of metering devices for feed for the fish, etc.

For greater understanding thereof, drawings of a cage for fish-farming, produced according to the present invention, are appended by way of non-limiting example.

Figure 1 shows a perspective view of the cage for fish-farming of the present invention.

Figure 2 shows a view in side elevation.

Figure 3 shows a plan view of the same cage.

Figures 4 to 7 show sections through the planes indicated.

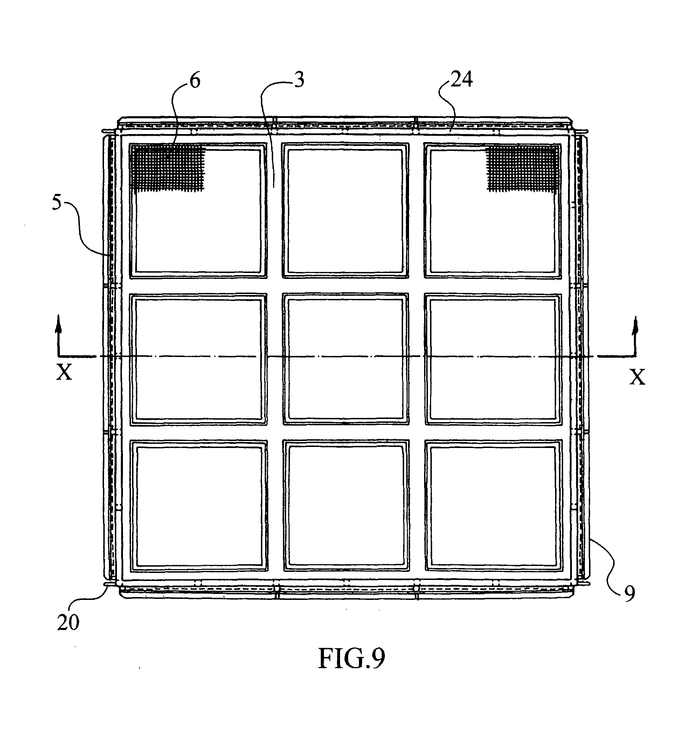

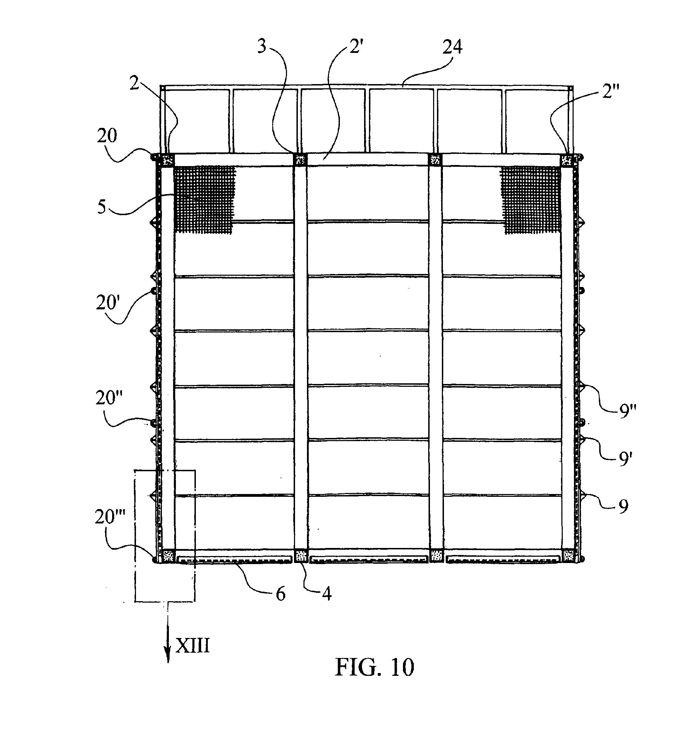

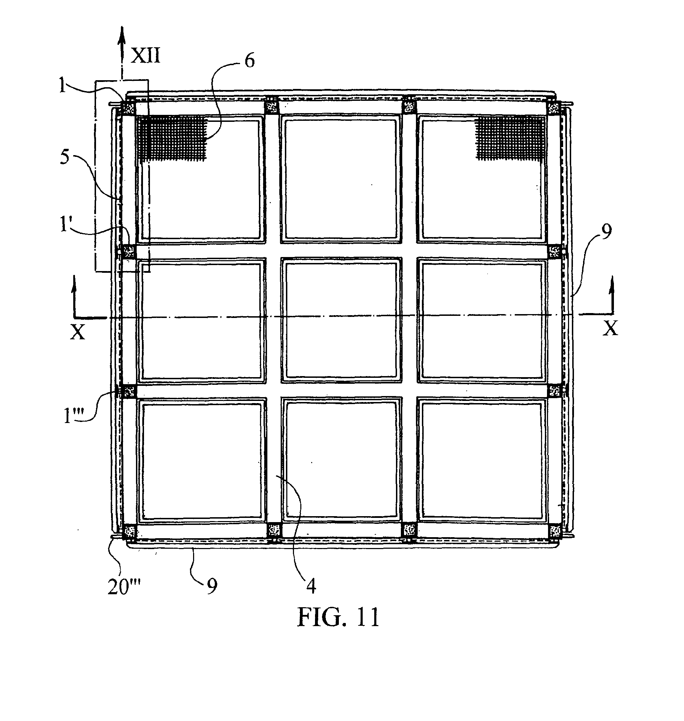

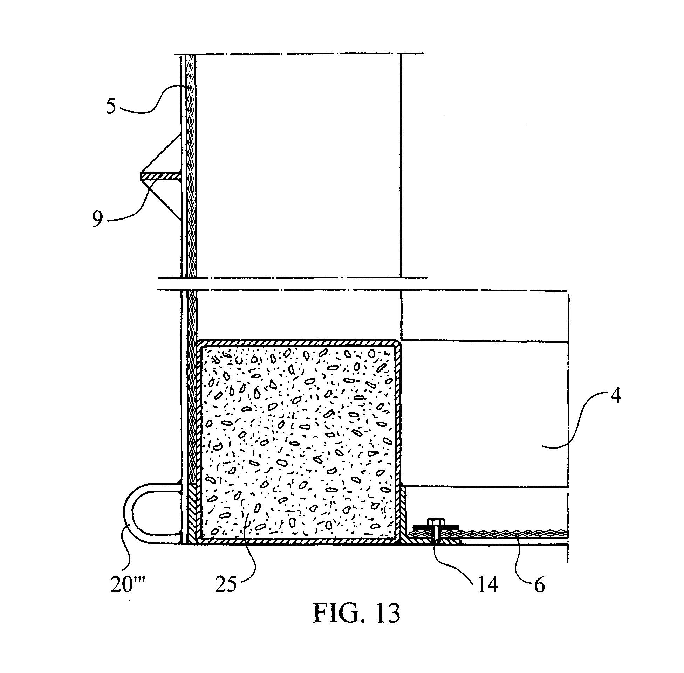

Figures 8 to 13 are sections through a cage with an alternative form of fastening for the lateral gratings.

Figures 14 and 15 are respective views of a device for fastening the lateral covering grating with respect to an outer reinforcing rail.

Figure 16 shows diagrammatically the towing of a cage for fish-farming towards the area for the unloading thereof.

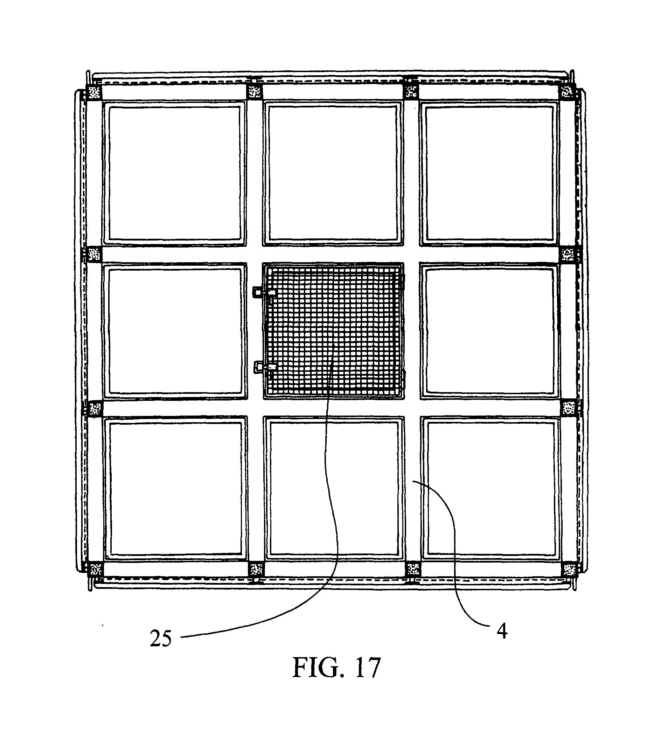

Figure 17 shows a plan view of a lower wall of the cage provided with an openable door.

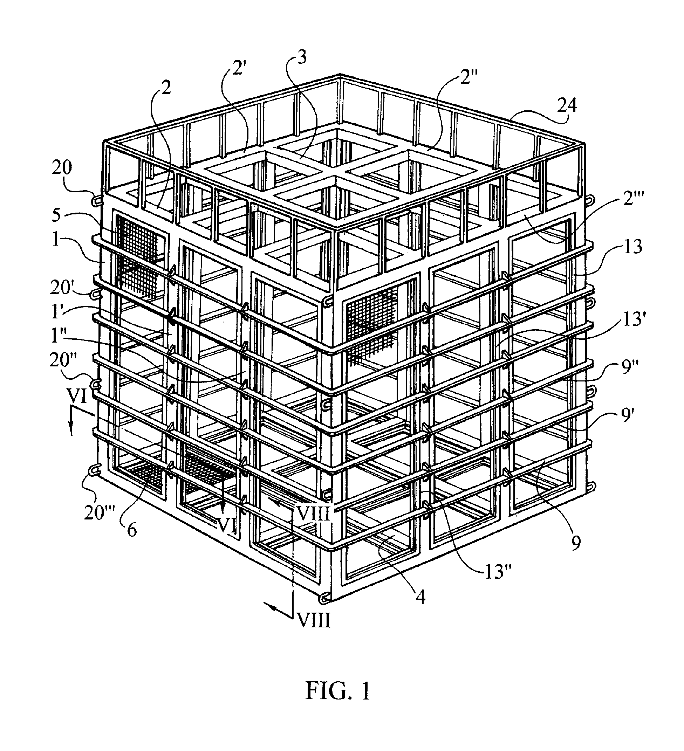

As can be seen from the drawings, the cage for fish-farming of the present invention comprises a rigid support structure, open at its upper side and provided with wide openings in its lateral faces and in its base or bottom, carrying suitable gratings for closing the openings of the cage which are submerged in the water, and the structure of the cage having flotation characteristics so that the upper part thereof emerges from the water. In a preferred version, it may assume a straight parallelepipedal shape, for example cuboid, although, as is obvious, it could assume other external forms such as polyhedral, prism-shaped, pyramid-shaped, etc. The structure is constituted, in the example illustrated, by a series of vertical members such as those indicated by the numbers 1, 1', 1" in Figure 1, which in variable number form the lateral surface of the cage. In the particular case that has been shown, the structure is cuboid in shape, being complemented by members of similar shape which complete the upper side and the lower side respectively, being indicated by the numbers 2, 2', 2" and 2'" for the upper side and not being numbered on the lower side since they are equivalent to the upper side. On the upper and lower sides, the internal space is occupied by a grid of similar members, respectively indicated by the numbers 3 on the upper side and 4 on the lower side, forming for example a right-angled or other type of grid, for the purpose of superficially closing said upper and lower sides, while simultaneously permitting the free passage of water.

Internally, both the lateral surface and the lower side of the cage will be covered by gratings which have been indicated by the numbers 5 for the lateral surface and 6 for the lower side, in order to permit the free entry and exit of the water, but preventing the escape of the fish, even in their smallest dimensions, that is to say, in the fry state.

The cage will therefore provide an internal space limited by the lateral surface and lower side covered by a grating on their openings and an upper side open to permit the entry of the feed for feeding the fish and other operations for servicing the cage.

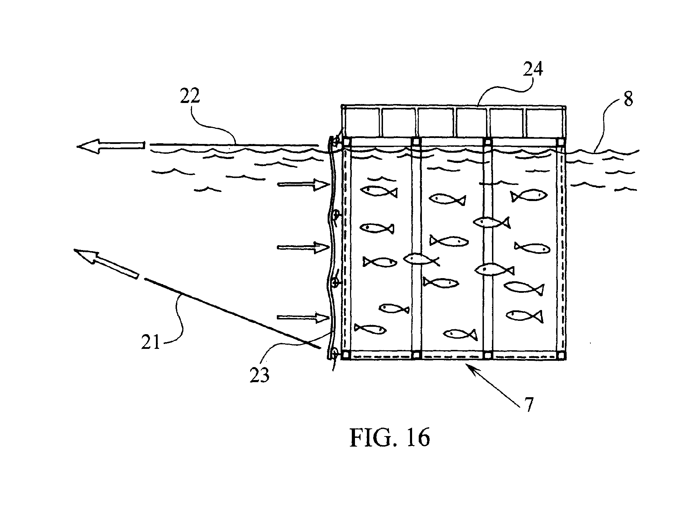

In its concrete embodiment, the structural elements of the cage, indicated by the numbers 1, 2, 3 and 4, will be members having a high mechanical strength and provided with buoyancy. For this, they may comprise an outer tubular member and a hollow inner space, or an exterior envelope with an internal filling of a foam-like material or other variants which make it possible to build the structure and obtain therein the required flotation characteristics so that the cage, as can be observed in Figure 16, indicated as a whole by the number 7, remains in flotation, the upper part of the cage protruding beyond the level of the water 8. If necessary, the buoyancy may be obtained or complemented by attaching add-on floating bodies to the cage structure.

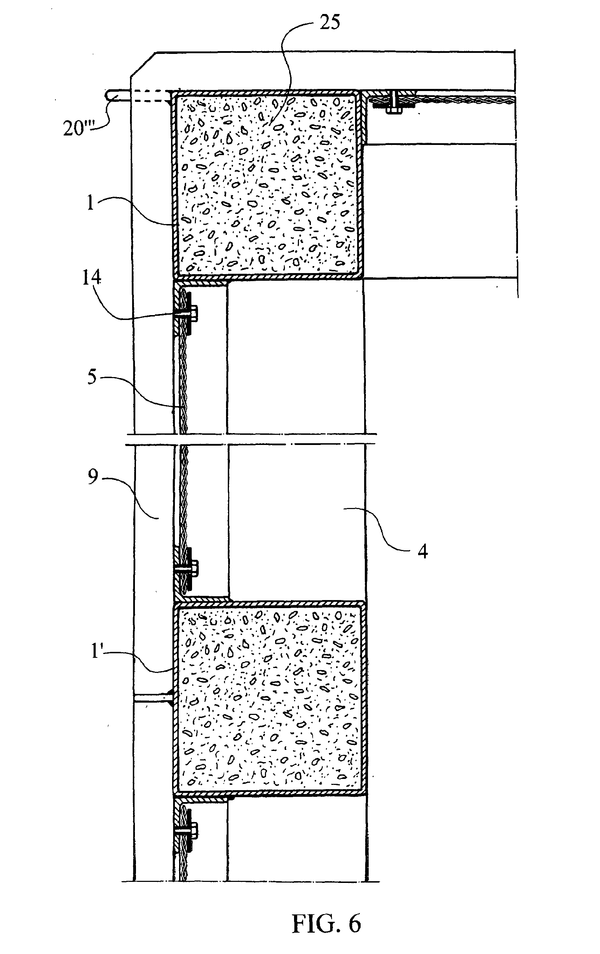

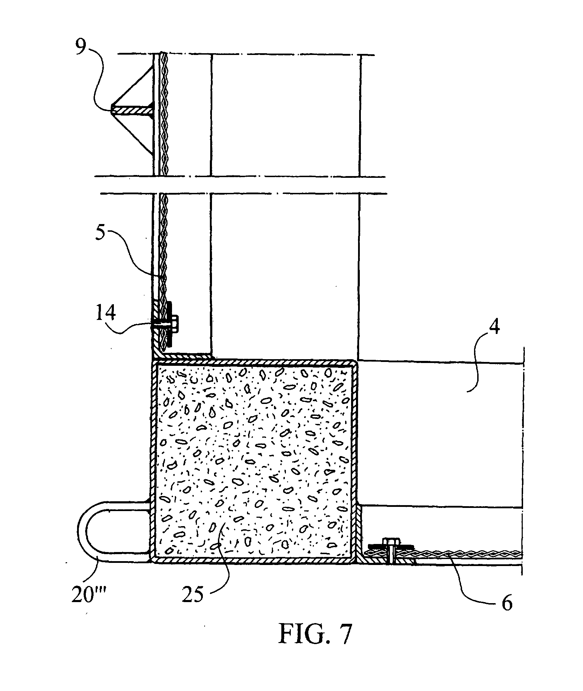

In the embodiments illustrated in the drawings, for example in Figures 6 and 7, the tubular members, for example 1, 1'.. consist of a tubular body, for example, produced from sheet steel and an inner filling 25 of a foam-like material, for example, expanded polyurethane or another material. However, it must be understood that the construction of the structural elements may be very varied, the interior being simply hollow or solid and the elements being produced from metallic materials, synthetic materials, concrete or other materials, provided that they comply with the characteristics of mechanical strength and resistance to the marine environment.

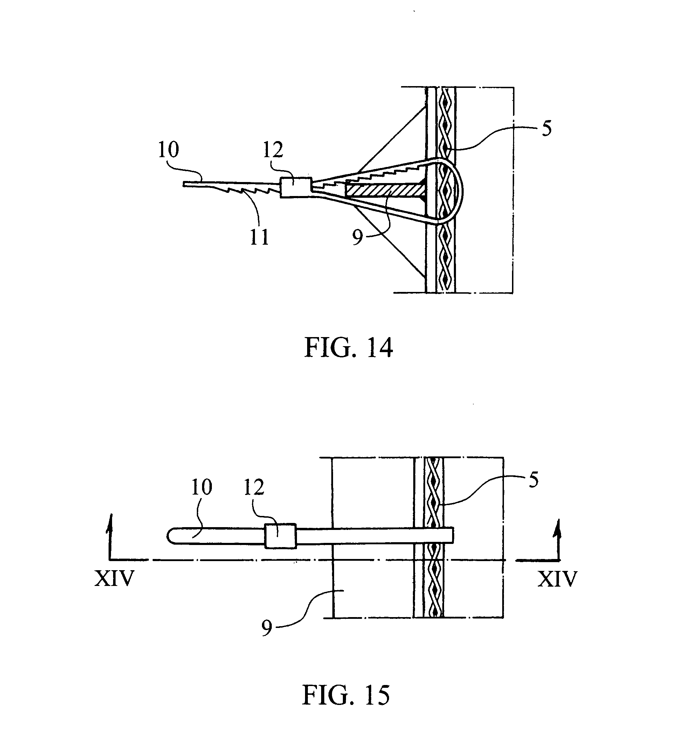

In order to prevent the gratings 5 from being deformed outwards or inwards, the cage has reinforcing means which essentially consist of a series of external bars or rails such as those indicated by the numbers 9, 9', 9".. which are joined externally to the cage structure and which serve as a stop for the gratings 5 to prevent them from curving outwards. To prevent curving inwards, recourse may be had to some system for fixing the grating to the cross-members 9, 9', 9".. or the placing of cross-members in the inner part. Thus, for example, Figures 14 and 15 show a fastening device consisting of a strip of synthetic material 10 provided with non-return toothing 11 and an end head 12 permitting the arrangement of said strip in the shape of a loop passing through the grating 5 and bearing on one of the reinforcing rails 9, fastening the grating 5 against the cage structure, preventing its deformation towards the inside.

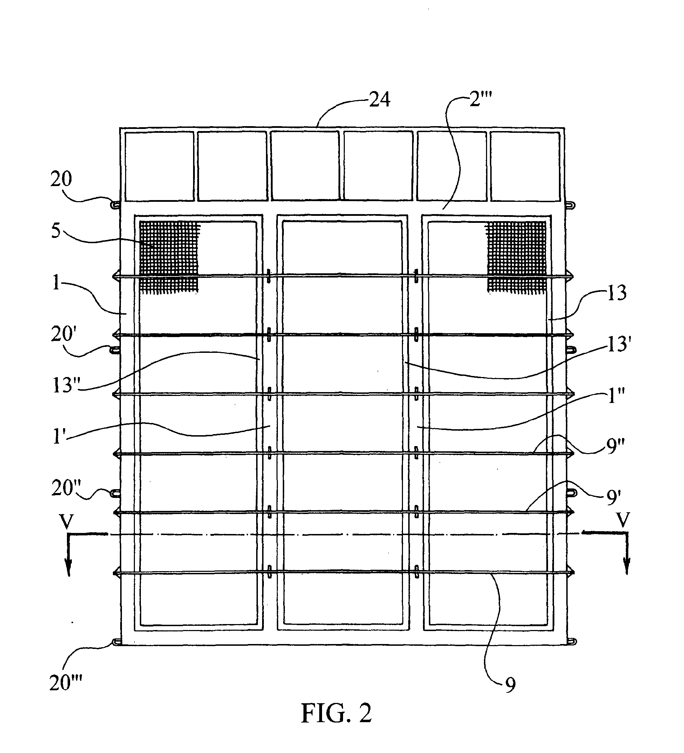

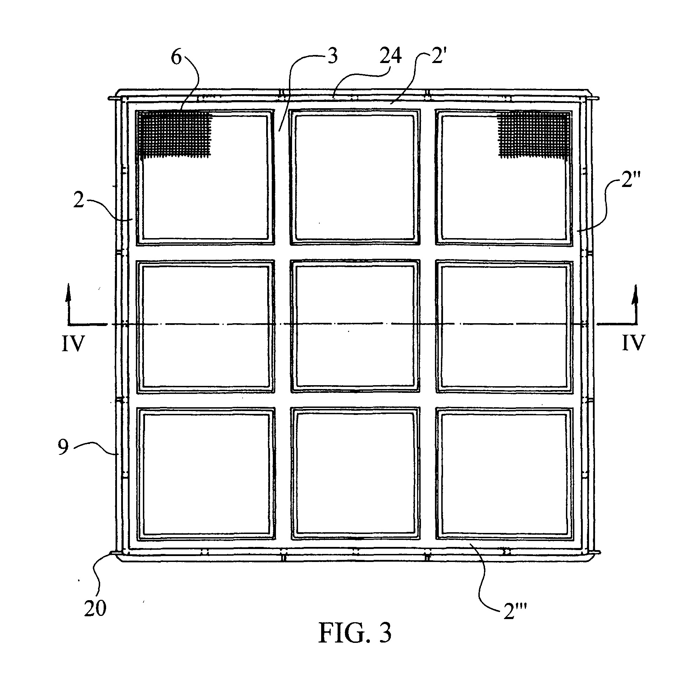

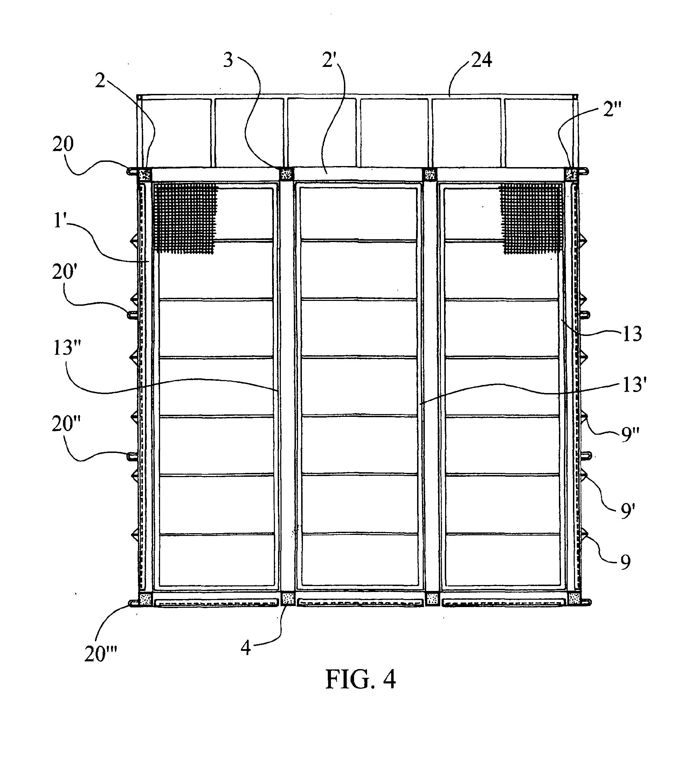

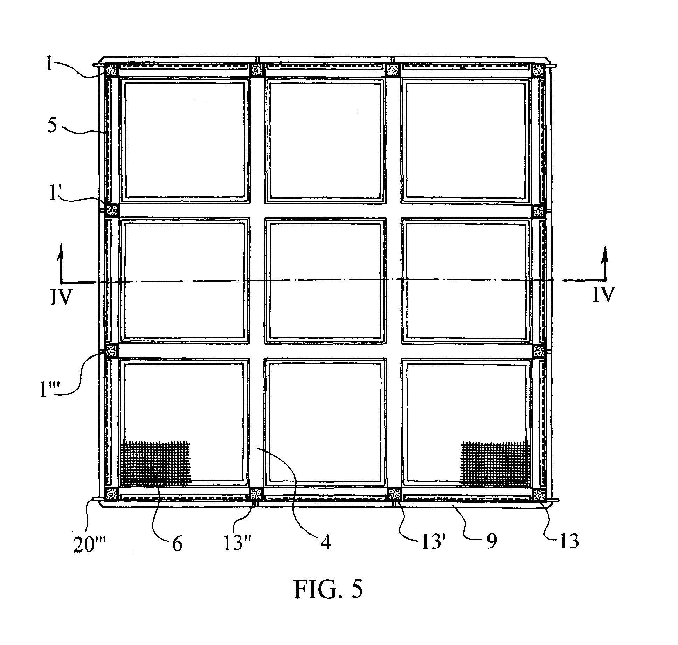

The gratings may be mounted in any manner which permits their fixed or removable connection with respect to the cage structure. Thus, for example, in the version in Figures 2 to 7, the gratings 5 are incorporated in frames 13, 13', 13".. which are fixed to the cage structure. Said frames will carry the corresponding grating 5 in association with them by means of some fixing system, for example, screws 14 and washers or some other similar means.

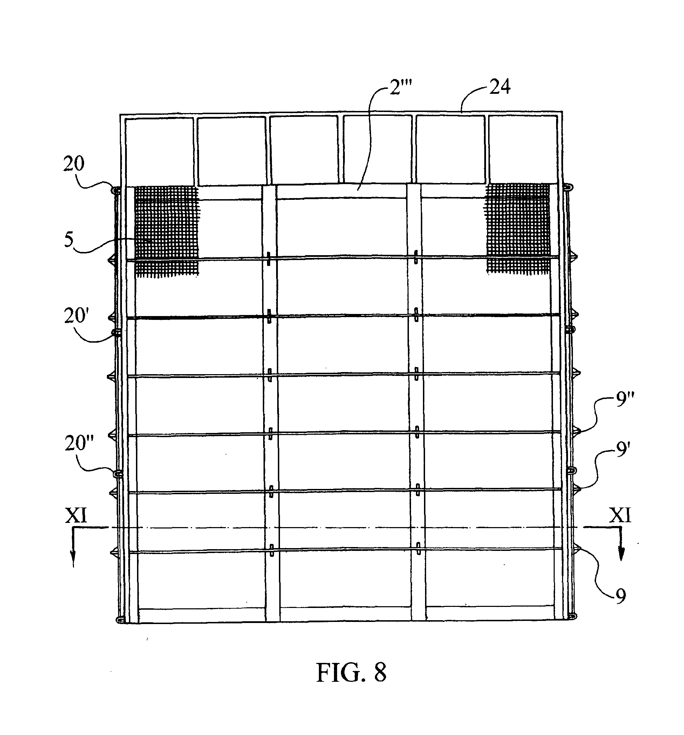

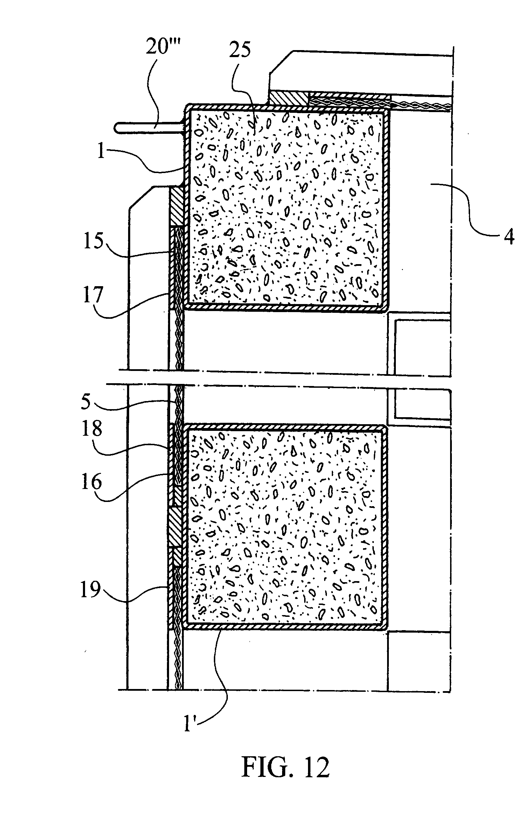

In the version corresponding to Figure 8 onwards, the gratings 5 will be detachable, being fitted laterally in grooves such as those indicated by the numbers 15 and 16 in Figure 12, these being able to be formed in the most suitable manner, for example by means of the plates 17, 18 and 19 arranged parallel to the front faces of the respective tubular members of the structure 1, 1' or others. This arrangement will make it possible to mount and remove the gratings, from the upper part of the cage.

The cage will be completed by means of assemblies of hitching rings or hooks coupled to some of its structural elements, there being illustrated in Figure 1 sets of hitching rings on each of the edges of the cuboid shape, being indicated in one case by the numbers 20, 20', 20" and 20'". Said hitching rings serve both for securing the cage to some firm point on the sea bed, and for towing the cage, as shown diagrammatically, by the ties 21 and 22 in Figure 16, for withdrawing said cage towards a site for unloading or servicing the latter, during which operation a canvas 23 or the like may be arranged for the protection of the fish during the towing of the cage.

In another version of the cage of the present invention, the bottom wall may be provided with an openable door for the extraction of the fish, removal of dead fish or other residues, or for other work. Although said openable door may have very varied dimensions and shape, in Figure 1 7 it has been shown in the shape of a door with frame 25, with hinges.

By reason of its features, the cage of the present invention will permit a method of extraction of the mass of fish by means of nets or panels coupled to the inner walls of the cage in order to reduce the volume of the interior thereof and to be able to reduce the space occupied by the fish so as to facilitate their capture.

The structure may be welded or able to be completely disassembled for its transport, and assembled by means of screws or other suitable fixing members.

In particular, the cross-members of the upper part of the structure may be removable in order to facilitate the operations of removal of the fish by means of the nets described above or by other means.

The cage will have other complementary structural details such as an upper handrail 24, which may have a protective mesh as far as the cage and which will facilitate the maintenance of the cage, and a platform for the installation of means for feeding the fish contained therein and other accessories. The cage may likewise carry on its upper part navigation markers and signals which correspond thereto if they are required.

## Claims

1. Cage for fish-farming, characterized in that it comprises a rigid structure open at its upper side and provided with wide openings in its lateral faces and in its base or bottom, carrying suitable gratings for closing the openings of the cage which are submerged in the water, and the cage structure having flotation characteristics so that the upper part thereof emerges from the water.

2. Cage for fish-farming, according to claim 1, characterized in that the rigid structure is produced in the shape of a rectangular straight parallelepiped.

3. Cage for fish-farming, according to claim 1, characterized in that the structural elements are constituted by tubular bodies with resistance to the marine environment and with buoyancy.

4. Cage for fish-farming, according to claim 3, characterized in that the elements of the structure are constituted by tubular bodies of sheet steel or other materials with anti-corrosion treatment and filling of a foam-like synthetic material.

5. Cage for fish-farming, according to claim 1, characterized in that the internal covering grating is constituted by grating panels introduced into grooves in the structure in order to allow their easy fitting and removal.

6. Cage for fish-farming, according to claim 1, characterized by the arrangement of multiple external profiles on the cage structure as a stop for the gratings, counteracting their outward curvature.

7. Cage for fish-farming, according to claim 1, characterized by the arrangement of fastenings for the grating which prevent it from curving inwards.

8. Cage for fish-farming, according to claim 7, characterized in that the fastenings for the grating are constituted by strips of synthetic material with one end toothed and the other end for retention, which make it possible to form loops for connecting the grating to the external stop cross-members.

9. Cage for fish-farming, according to claim 1, characterized in that the upper side of the cage is provided with a protective grating.

10. Cage for fish-farming, according to claim 1, characterized in that it is constituted by means of rigid members coupled to one another so as to be able to be dismantled.

11. Cage for fish-farming, according to claim 1, characterized in that it has at the bottom an openable service door.

12. Cage for fish-farming, according to claim 1, characterized in that the upper side is provided with a service handrail.

13. Cage for fish-farming, according to claim 1, characterized in that the structure is provided with series of external rings or hooks for securing the cage and for towing it.
